# EUROPÄISCHE PATENTSCHRIFT

(11) **EP 2 524 149 B1**
(45) Veröffentlichungstag und Bekanntmachung des Hinweises auf die Patenterteilung: **30.03.2016**
(21) Anmeldenummer: 11700623.9
(22) Anmeldetag: 05.01.2011
(51) Int. Cl.: F16C 35/063

(54) **VERFAHREN ZUM FESTLEGEN EINES LAGERRINGS AN ODER IN EINEM BAUTEIL**
METHOD FOR FIXING A BEARING RING ON OR IN A COMPONENT
PROCÉDÉ POUR FIXER UNE BAGUE DE PALIER SUR OU DANS UN ÉLÉMENT

(30) Priorität: 16.01.2010 DE 102010004792
(43) Veröffentlichungstag der Anmeldung: 21.11.2012
(73) Patentinhaber: Aktiebolaget SKF, 415 50 Göteborg (SE)
(72) Erfinder: WOHLFEIL, Florian, 97464 Niederwerrn (DE); MEYER, Wilhelm, 97453 Reichmannshausen (DE)
(74) Vertreter: Schonecke, Mitja
(86) Internationale Anmeldenummer: PCT/EP2011/050089
(87) Internationale Veröffentlichungsnummer: WO 2011/086017

(56) Entgegenhaltungen:
- EP-A2- 0 354 498
- DE-A1- 10 236 701
- DE-A1-102007 052 574

## Beschreibung

Die Erfindung betrifft ein Verfahren zum Festlegen eines Lagerrings an oder in einem Bauteil mittels einer Klebeverbindung.

In verschiedenen Fällen, z. B. beim Einsatz langer, gelagerter Wellen, sind bei der Montage von Wälzlagern die freie Positionierbarkeit und ein fester Sitz des Lagers auf dem zu lagernden Bauteil sehr wichtig. Natürlich spielen auch die wirtschaftlichen Aufwendungen zur Realisierung der Befestigung eine große Rolle.

Bekannt und üblich sind für die Festlegung zunächst mechanische Lösungen. Hier kommen Spannhülsen zum Einsatz, die über einen kegeligen Sitz eine kraftschlüssige Verbindung herstellen. Ferner sind Exzenterringe bekannt, mit denen ein fester Verbund zwischen Lager und zu lagerndem Bauteil hergestellt werden kann. Häufig werden auch Schraubverbindungen eingesetzt. Hierbei werden insbesondere Madenschrauben verwendet, die radial zur Welle in ein Verbindungsteil eingeschraubt werden, um das Lager auf dem insbesondere wellenförmigen Bauteil festzulegen.

Nachteilig bei der Befestigung mittels einer Spannhülse ist weiterhin, dass mindestens drei Bauteile zur Befestigung benötigt werden. Diese müssen eine relativ hohe Genauigkeit haben, was entsprechende Kosten verursacht. Neben dem Fertigungs- und Kostenaufwand bedeuteten mehrere Bauteile auch eine Anhäufung von Fertigungstoleranzen. Je nach Lage der Istmaße können sich diese ungünstig addieren.

Ein weiteres Problem bei der Montage einer Spannhülse besteht darin, dass der Querschnitt der Hülse aus Festigkeitsgründen so groß gewählt werden muss, dass mit Ausnahme von inkorporierten Spannhülsen (Spezialhülsen) die jeweils nächst größere Lagerkennzahl gewählt werden muss, um auf der anderen Seite den Lagerring nicht zu stark zu schwächen. Diese Tatsache schränkt den Konstruktionsspielraum ein.

So erfordert beispielsweise die Änderung von einer Madenschraubenbefestigung hin zu einer Spannhülsenbefestigung auch eine Anpassung des Einbauraums. Gerade bei Leistungserhöhungen (z. B. bei höheren Drehzahlen) von Maschinen, die eine höhere Laufgenauigkeit erfordern, bedeutet dies, dass die Anwendung nicht mehr so kompakt konstruiert werden kann.

Ein spezielles Problem beim Einsatz von Spannhülsen besteht darin, dass sich die gewünschte Lage des Lagers bei der Montage über das Aufschieben nur schwer definieren lässt. Dies bedeutet in der Praxis, dass der Pressverband wiederholt aufgehoben werden muss, um eine neue Positionierung vornehmen zu können; alternativ müssen konstruktive Maßnahmen ergriffen werden, z. B. eine spezielle Montagevorrichtung geschaffen werden. Gerade die Positionierung des Festlagers erlaubt keine Abweichung von der vorgesehenen Position, da ansonsten die Lage der Welle zur Umgebungskonstruktion unter Umständen die Funktion einschränkt.

Beim Einsatz von Schraubverbindungen und Exzenterringen kommt es zu dem Problem, dass durch diese Befestigungsmöglichkeit eine Verkippung des Lagerrings zu einem wellenförmigen Bauteil auftreten kann. Das führt zu einer reduzierten Laufruhe bzw. Laufgenauigkeit.

Weiterhin besteht das Problem, dass die Befestigungsart je nach der Belastung nicht ausreichend sein kann, um Mikrobewegungen vollständig zu vermeiden. Oft ist in der Passfuge solcher Lager Passungsrost mit entsprechenden Folgeschäden zu beobachten. Wird die Befestigung indes zu stark verspannt, können die Befestigungsmittel (insbesondere die Madenschraube) beschädigt werden.

Hinsichtlich der Festigkeit der Befestigung des Lagerrings auf dem Bauteil ist negativ, dass die Übertragung von Axialkräften deutlich eingeschränkt sein kann. Vor allem beim Einsatz von Madenschrauben tritt durch ein zu starkes Anziehen der Schrauben auch eine Verformung des Lagerrings auf, was zu einem ungünstigen Laufverhalten und zu Verspannungen führt. Dies muss durch eine entsprechend große Lagerluft kompensiert werden. Eine erhöhte Lagerluft bringt jedoch wiederum Nachteile eines ungünstigen Traganteils im Lager mit sich. Ansonsten gilt, dass auch durch die Montage die radiale Lagerluft beeinflusst wird. Je nach Lagerart (z. B. insbesondere bei Rillenkugellagern) ist das Maß der Lagerluftreduziening nur schwer zu kontrollieren. Das kann dazu führen, dass das Lager radial verspannt wird. Dies macht eine aufwändige Überwachung der Montage erforderlich bzw. ergibt eine Lagerung mit reduzierter Lebensdauer.

Nachteilig ist ferner folgendes: Die Madenschraube erreicht ihre Festigkeit durch das Eingraben in den Werkstoff des Bauteils (Welle), d. h. durch Formschluss. Da dies auf der Welle zu einem Aufwurf führt, wird die Demontage des Lagers erschwert.

Ein spezifisches Problem des Exzenterrings ist, dass eine feste Verbindung nur durch Verdrehen zweier Ringe zueinander erreicht werden kann. Dies bedeutet allerdings, dass bei schnellem Drehrichtungswechsel des Lagers ein Atmen der Passfuge auftreten und sich dadurch der Verband lösen kann.

Bekannt ist es auch, eine Klebeverbindung zur Befestigung eines Lagers an oder in einem Bauteil vorzusehen. Eine solche Lösung ist beispielsweise in der DE 22 03 664 A1 beschrieben. Der Klebstoff wird dabei unmittelbar bei der Montage in die Passfuge zwischen den zu verbindenden Teilen eingebracht. Dieses Verfahren hat den Nachteil, dass sich das Einbringen eines Klebstoffs in Montagelinien schwierig gestaltet bzw. die Prozesssicherheit - insbesondere hinsichtlich der Menge an zuzuführendem Klebstoff und hinsichtlich der Sauberkeit der Fügepartner - von den Gegebenheiten bei der Montage bzw. vom jeweiligen Montagearbeiter abhängt.

Des weiteren besteht bei der vorbekannten Lösung der Nachteil, dass bei manueller Einbringung des Klebstoffs Umgebungsbauteile, wie z. B. Dichtungen, mit Klebstoff benetzt werden können. Hierdurch kann die Funktion derartiger Bauteil nachteilig beeinflusst werden.

Weiter ist es aus der DE 10 2007 052 574 A1 bekannt, in den mit einer Welle zu verklebenden Lagerinnenring eine Ringnut einzuarbeiten, in die ein geschlitzter hohlzylindrischer Ring aus Klebematerial eingelegt wird. Wenn Welle und Lagerring in der gewünschten Relativposition angeordnet sind, wird der Klebstoff aktiviert, wodurch sich der gewünschte Klebeverbund ergibt. Wenngleich damit bereits eine stabile Klebeverbindung hergestellt werden kann, die eine einfach handhabbare Technologie darstellt, muss hier wegen des separaten Teils aus Klebstoff nachteilig ein relativ großer Spalt zwischen der Welle und dem Lagerring vorgesehen werden, was zumindest in diesem Bereich die Kleber-Tragfähigkeit einschränkt. Weitere Lösungen sind aus der EP 0 354 498 A2 und aus der DE 102 36 701 A1 bekannt.

Der Erfindung liegt daher die Aufgabe zugrunde, ein Verfahren zum Festlegen eines Lagerrings an oder in einem Bauteil mittels einer Klebeverbindung so fortzubilden, dass eine weiter verbesserte Handhabung und einfachere und somit wirtschaftlichere Verbindung hergestellt werden kann. Dabei wird auch eine höhere Tragfähigkeit des Klebers als bei der vorbekannten Lösung angestrebt.

Die Lösung dieser Aufgabe durch die Erfindung ist dadurch gekennzeichnet, dass das Verfahren die Schritte aufweist:
a) Aufbringen des Klebstoffs an eine Fläche des Lagerrings, die zum Verkleben mit dem Bauteil vorgesehen ist;
b) Voraushärtenlassen des Klebstoffs auf der zum Verkleben vorgesehenen Fläche, so dass der Klebstoff keine adhäsive Eigenschaft mehr aufweist;
c) Fügen des Lagerrings und des Bauteils in die gewünschte Relativposition;
d) Aktivieren des Klebstoffs derart, dass er einen adhäsiven Verbund zwischen dem Lagerring und dem Bauteil eingeht,
wobei bei der Aktivierung des Klebstoffs gemäß Schritt d) eine Volumenvergrößerung des Klebstoffs erfolgt, die bewerkstelligt wird, indem ein Klebstoff verwendet wird, dem ein chemisches oder physikalisches Treibmittel beigegeben ist, wobei der Klebstoff bei seiner Aufbringung gemäß Schritt a) auch in mindestens einen ringnutartig ausgebildeten Aufnahmeraum gefüllt wird, der in der dem Bauteil zugewandten, zum Verkleben vorgesehenen Fläche des Lagerrings angeordnet ist, wobei der radiale Abstand zwischen dem Grund der Ringnut und dem Bauteil größer ist als der radiale Abstand zwischen der zum Verkleben vorgesehenen Fläche und dem Bauteil.

Beim Aufbringen des Klebstoffs gemäß obigem Schritt a) wird bevorzugt Klebstoff mit einer pastösen Konsistenz verwendet.

Die Aktivierung des Klebstoffs gemäß obigem Schritt d) kann durch Aufgabe von Wärmeenergie auf den Klebstoff erfolgen, insbesondere durch Induktion. Möglich ist es auch, dass die Aktivierung des Klebstoffs durch Beaufschlagung mit Ultraschall erfolgt.

Der dem Aufnahmeraum benachbarte und einem axialen Ende des Lagerrings zugewandte Bereich kann einen reduzierten radialen Spaltabstand zwischen Lagerring und Bauteil aufweisen, der eine Barriere für den Klebstoff bildet. Dadurch kann der aktivierte und sich im Volumen vergrößernde Kunststoff nicht so leicht nach außen abfließen, sondern es wird ein gewisser Druck im Raum zwischen Lagerring und Bauteil aufgebaut. D. h. es kommt zu einer gewissen Vorspannung im Ringraum zwischen Innenring und Welle. Bei gleichmäßiger Expansion werden hierdurch auch in vorteilhafter Weise Lagerring und Welle zueinander zentriert.

Unter Adhäsion wird vorliegend die Haftung zwischen dem Klebstoff und der Oberfläche des Lagerrings bzw. des Bauteils verstanden.

Das Fügen des Bauteils und des Lagerrings erfolgt in einem Status des Klebstoffs, in der dieser noch nicht "klebt". Erst nach dem Erreichen der genauen Relativposition zwischen den zu verbindenden Bauteilen wird der Klebstoff "aktiviert", so dass der Klebeverbund hergestellt wird.

Der Fluss des Klebstoffs kann nach seiner Aktivierung in axiale Richtung zwischen Lagerring und Bauteil durch mindestens ein Barriereelement begrenzt werden, das - wie erwähnt - als Spalt mit reduziertem Spaltabstand ausgeführt sein kann. Als Barriereelement kann auch ein Dichtungsring in Frage kommen, der als O-Ring ausgebildet sein kann. Andererseits kann es sich dabei auch um einen Kalibrierring handeln. Das Barriereelement ist dabei bevorzugt in einer Ringnut im Lagerring oder im Bauteil angeordnet.

Der Lagerring ist bevorzugt der Innenring eines Wälzlagers und das Bauteil dann eine Welle. Es ist aber auch genauso möglich, dass der Lagerring der Außenring eines Wälzlagers und das Bauteil ein Gehäuse ist.

Die vorgeschlagene Verfahrensweise bietet den Vorteil, dass in kostengünstiger Weise ein stabiler Klebeverbund herstellbar ist. Es können problemlos unterschiedliche Werkstoffe mit unterschiedlichen Material-Kennwerten miteinander verbunden werden.
In der Zeichnung sind Ausführungsbeispiele der Erfindung dargestellt. Es zeigen:
- Fig. 1: den Radialschnitt durch einen Innenring eines Wälzlagers, wobei auf die Innenbohrung ein Klebstoff aufgetragen wurde,
- Fig. 2: den Innenring nach Fig. 1, in den jetzt eine Welle eingeschoben wurde, die mit dem Innenring fest verbunden werden soll,
- Fig. 3: den Vorgang des Aktivierens des Klebstoffs, wodurch sich ein Klebeverbund zwischen Innenring und Welle ergibt, und
- Fig. 4: den Radialschnitt durch den Innenring, wobei hier einige Details der Ausgestaltung dargestellt sind, die in Fig. 1 weggelassen wurden.

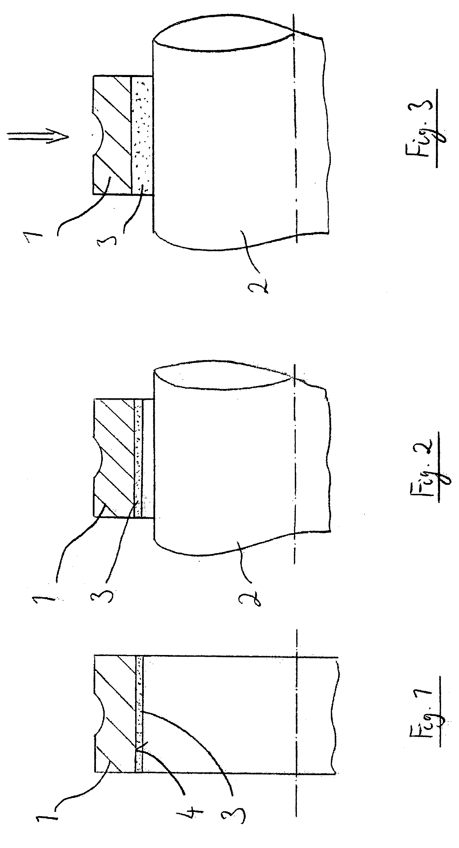

In Fig. 1 ist ein Innenring 1 eines Kugellagers skizziert, der mit einer in Fig. 1 nicht dargestellten Welle verbunden werden soll, und zwar durch einen Klebevorgang. Hierzu ist auf die innenzylindrische Fläche 4 des Innenrings 1 ein Klebstoff 3 aufgebracht. Dieser Klebstoff 3 hat bei seiner Aufbringung auf den Innenring 1 eine pastöse Konsistenz. Ist er aufgebracht, erfolgt ein Voraushärten des Klebstoffs 3. Dies kann durch hinreichend langes Lagern des Innenrings 1 samt Klebstoff 3 an der Luft erfolgen. Der Klebstoff 3 "trocknet" hierdurch ein, so dass die Klebstoffschicht nicht nur eine gewisse mechanische Stabilität erhält, sondern auch nicht mehr nennenswert klebt, wenn der Klebstoff 3 berührt wird. Demgemäß wird die weitere Handhabung des mit Klebstoff 3 versehenen Innenrings 1 einfach, da keine besonderen Vorkehrungen bei der Handhabung bzw. beim Transport getroffen werden müssen.

Der so vorbereitete Innenring 1 (der natürlich bereits mit dem nicht dargestellten Lageraußenring und den Wälzkörpern verbunden sein kann) wird dann an den Ort der Montage geschafft, an dem er mit einer Welle 2 verbunden wird, wie es in Fig. 2 skizziert ist. Demgemäß wird die Welle 2 in die Innenrings-Bohrung eingeschoben. Dargestellt ist, dass sich ein radialer Spalt zwischen der Oberfläche des Klebstoffs 3 und dem Außenumfang der Welle 2 ergibt, wobei der Spalt hier stark übertrieben dargestellt ist.

Zur Herstellung der Klebeverbindung wird nunmehr - was in Fig. 3 angedeutet ist - der Klebstoff 3 aktiviert, was durch den Pfeil symbolisiert ist. Es kann sich hierbei beispielsweise um eine Erwärmung des Klebstoffs 3 handeln. Durch die Aktivierung vergrößert sich im Ausfühningsbeispiel das Volumen des Klebstoffs 3, so dass der - hier übertrieben groß dargestellte - Spalt zwischen Welle 2 und Klebstoff 3 geschlossen wird und eine Klebeverbindung zwischen dem Innenring 1 und der Welle 2 hergestellt wird.

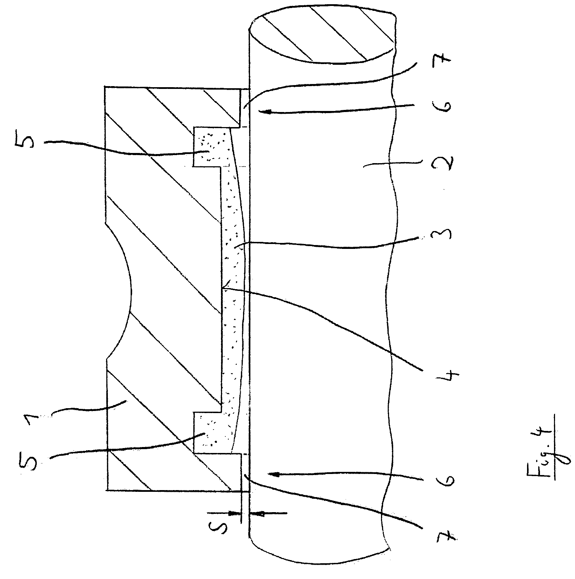

In Fig. 4 ist angedeutet, wie die Fläche 4 ausgebildet sein kann, auf die der Klebstoff 3 aufgetragen wird. Zu erkennen ist, dass in den seitlichen Endbereichen des Lagerrings 1 zwei Aufnahmeräume 5 in Form je einer Ringnut eingearbeitet sind (es ist natürlich auch nur eine Ringnut oder mehr als zwei möglich). In den sich nach außen hin anschließenden Bereichen 6 ist die Bohning des Innenrings 1 etwas im Durchmesser verkleinert, so dass sich ein relativ enger Spalt 7 mit einem Spaltabstand s ergibt. Hierdurch wird eine Barrierewirkung für den Klebstoff 3 erzielt, wenn dieser aktiviert wird und sich in Folge dessen in seinem Volumen vergrößert.

Durch die Ausgestaltung der Bohning des Innenrings gemäß Fig. 4 kann der sich expandierende Klebstoff 3 zunächst in radiale Richtung ausdehnen. Nach Erreichen des Fügespalts zwischen Innenring und Welle kommt zur radialen Expansion auch noch eine Expansion des Klebstoffs in axiale Richtung hinzu, was einen zusätzlichen Festigkeitseffekt bewirkt. Diesen Effekt der axialen Ausdehnung kann man durch die Ausgestaltung des Verlaufs des Spalts zwischen Innenring und Welle beeinflussen.

In den Bohrungsdurchmesser des Innenrings 1 kann gegebenenfalls auch eine spiralförmig verlaufende Nut eingearbeitet sein, die die Verteilung des Klebstoffs 3 im Raum zwischen Innenring 1 und Welle 2 erleichtert.

Zum Einsatz kommen kann ein Klebstoff, der bei typischen Umgebungstemperaturen (zwischen 0° C und 50 °C) eine feste Konsistenz hat. Der Klebstoff hat demgemäß bei typischen Umgebungstemperaturen nicht nur eine feste Konsistenz, er weist auch keine adhäsive Eigenschaft auf.

Es können generell Schmelzklebstoffe zum Einsatz kommen (auch als "Hotmelts" bezeichnet). Diese sind bei Raumtemperatur fest. Sie werden durch Aufschmelzen verarbeitbar, d. h. sie entfalten bei Erwärmung ihre adhäsive Wirkung. Es erfolgt hier also eine Aktivierung durch Temperatur. Die heiße Klebstoffschmelze geht den adhäsiven Verbund ein. Unmittelbar nach dem Abkühlen und Erstarren des Klebstoffs ist die Verbindung fest. Dies ermöglicht in vorteilhafter Weise eine schnelle Montage. Zum Einsatz kommen können auch Kontaktklebstoffe.

Weiterhin können anaerob härtende Klebstoffe eingesetzt werden. Diese Klebstoffe werden als einkomponentiges System eingesetzt. Die eingesetzten Monomere von (modifizierten) Acrylsäure-Estern härten nach einem Radikalketten-Mechanismus ähnlich den Metlrylmethacrylaten aus. Das Besondere dabei ist, dass die Härtereaktion nur unter Ausschluss von Sauerstoff, also anaerob, und in Anwesenheit von Metallionen startet, wenn der Klebstoff in einer engen metallischen Klebfuge von der Umgebungsluft abgeschlossen wird. Es können nur metallische Werkstoffe damit geklebt werden, was für die vorliegende Erfindung von Vorteil ist, da für die Aushärtung freie Metallionen als Reaktionspartner benötigt werden.

Weitere bevorzugte Klebstoffe, die vorteilhaft bei der vorliegenden Erfindung eingesetzt werden können, sind strahlenhärtende Klebstoffe. Bei diesen Klebstoffen, die als einkomponentige Systeme eingesetzt werden, härten durch radikalische Polymerisation zu festen Polymeren, wobei die Bildung der Startradikale durch Bestrahlung mit UV-Licht (oder anderen Strahlenquellen, wie z. B. Elektronen) hervorgerufen wird. Die Wellenlänge des UV-Lichts muss dabei genau auf das eingesetzte Klebstoffsystem abgestimmt sein. Die Aushärtung erfolgt durch Bestrahlen mit UV-Licht. Es sind hierbei mehrere Varianten möglich: Zunächst sind UV-Acrylate bekannt. Im flüssigen Zustand besteht ein radikalisch vernetzender UV-Klebstoff überwiegend aus Monomeren und Photoinitiatoren. In diesem Zustand lässt sich der Klebstoff leicht dosieren. Durch die Einwirkung von UV-Strahlung werden die Photoinitiatoren in freie Radikale gespalten. Diese Radikale leiten die Bildung von Polymerketten ein. Im ausgehärteten Zustand besteht der UV-Klebstoff aus vernetzten Polymerketten. Weiterhin können kationische Epoxies (Epoxidharze-Klebstoffe) zum Kleben von nicht transparenten Substraten eingesetzt werden, was vorliegend vorteilhaft ist. Im Unterschied zu den radikalisch härtenden Acrylatklebstoffen können die kationisch härtenden Klebstoffsysteme nach einer ausreichenden Aktivierung mit UV-Strahlung im Dunklen weiterhärten. Kationische Epoxies können für Anwendungen mit einem UV-durchlässigen Bauteil ebenso eingesetzt werden, wie für Anwendungen bei nicht UV-durchlässigen Werkstoffen. Bei Letzteren muss der Klebstoff nach dem Dosieren, jedoch vor dem Fügen mit UV-Strahlung aktiviert werden. Nach der Aktivierung besitzt der Klebstoff eine begrenzte offene Zeit, in der die Bauteile zu fügen sind.

Sehr vorteilhaft ist die Volumenvergrößerung des Klebstoffs bei seiner Aktivierung.

Hierzu enthält der Klebstoff vorzugsweise ein physikalisch oder chemisch wirkendes Treibmittel, das bei der Aktivierung des Klebstoffs selbst aktiviert wird und das durch Gasbildung oder Gas-Ausdehnung das Volumen des Klebstoffs vergrößert.

Bei physikalisch wirkenden Treibmitteln ist die Volumenvergrößerung eine physikalische Folge des Erwärmens von mit Gas oder verdampfbarer Flüssigkeit gefüllten Mikrohohlkugeln.

Bei chemischen Treibmitteln wird durch eine chemische Reaktion ein Gas abgespaltet, welches die Volumenvergrößerung des Klebstoffs bewirkt.

Aufgrund der Volumenvergrößening nach der Aktivierung ist es nicht erforderlich, dass der Bereich zwischen Innenring und Welle übermäßig genau zueinander toleriert werden muss. Vielmehr darf ein Spalt zwischen Klebstoff und Innenbohrung des Innenrings verbleiben, was das Fügen der beiden Teile erleichtert. Aufgrund der Volumenvergrößerung füllt der Klebstoff nach der Aktivierung den Spalt aus und verbindet hierdurch die beiden Teile stoffschlüssig.

Für das vorgeschlagene Verfahren kann ein Klebstoff auf Basis von Polyurethanen, Epoxidharzen oder Acrylaten verwendet werden. Dabei schließt der Begriff "Acrylat" substituierte Acrylate wie Methacrylat ein.

Beispiele von Klebstoffen, die sich bewährt haben, sind so genannte "reaktive Schmelzklebstoffe". Diese sind in geschmolzenen Zustand streichfähig, so dass sie in diesem Zustand auf die Innenbohrung des Innenrings aufgebracht werden können, ohne dass der Aushärtungs-Mechanismus aktiviert wird. Dieser erfordert vielmehr ein Erwärmen auf eine höher liegende Aktivierungstemperatur, bei der ein latenter Härter für eine rektionsfähige Bindemittel-Komponente (beispielsweise ein Präpolymer mit Epoxid- oder Isocyanat-Gruppen) aktiviert wird.

Es wird hierzu exemplarisch auf die EP 0 354 498 A2 hingewiesen, wo hierzu nähere Angaben zu finden sind.

Der Klebstoff enthält eine Harzkomponente, mindestens einen thermisch aktivierbaren latenten Härter für die Harzkomponente sowie ggf. Beschleuniger, Füllstoffe, Thixotropiehilfsmittel und weitere übliche Zusatzstoffe, wobei die Harzkomponente durch Umsetzung von einem beim Raumtemperatur festen Epoxidharz, einem bei Raumtemperatur flüssigen Epoxidharz und einem linearen Polyoxypropylen mit Amino-Endgnippen erhältlich ist. Die Epoxidharze werden in einer solchen Menge, bezogen auf das Polyoxypropylen mit Amino-Endgruppen, eingesetzt, dass ein Überschuss an Epoxidgruppen, bezogen auf die Aminogruppen, gewährleistet ist. Als latenter Härter ist beispielsweise Dicyandiamid geeignet.

Speziellere Ausfühningsformen für einen brauchbaren Klebstoff, mit dem sich die Umsetzung der vorliegenden Erfindung ermöglicht, sind auch in der WO 93/00381 offenbart.

Weiterhin können Epoxidharz-Strukturklebstoffe eingesetzt werden, wie sie beispielsweise in der WO 00/37554 näher beschrieben sind.

Hierbei handelt es sich um Zusammensetzungen, die ein Copolymeres mit mindestens einer Glasübergangstemperatur von -30 °C oder niedriger und gegenüber Epoxiden reaktiven Gruppen oder ein Reaktionsprodukt dieses Copolymeren mit einem Polyepoxid, weiterhin ein Reaktionsprodukt aus einem Polyurethan-Prepolymer und einem Polyphenol oder Aminophenol sowie schließlich mindestens ein Epoxidharz enthalten. Um diese Zusammensetzungen wärmehärtbar zu machen, enthalten sie zusätzlich einen latenten Härter aus der Gruppe Dicyandiamid, Guanamine, Guanidine, Aminoguanidine, feste aromatische Diamine und/oder Härtungsbeschleuniger. Zusätzlich können sie Weichmacher, Reaktivverdünner, Rheologie- Hilfsmittel, Füllstoffe, Netzmittel und/oder Alterungsschutzmittel und/oder Stabilisatoren enthalten.

Die erwähnten thermisch aktivierbaren Klebstoffsysteme können mit oder ohne die oben beschriebenen Treibmittel eingesetzt werden, je nachdem, ob man eine Volumenvergrößerung des Klebstoffs bei bzw. nach der thermischen Aktivierung anstrebt oder nicht.

### Bezugszeichenliste

- 1: Lagerring (Innenring)
- 2: Bauteil (Welle)
- 3: Klebstoff
- 4: Fläche
- 5: Aufnahmeraum
- 6: Bereich
- 7: Spalt

- s: Spaltabstand

## Patentansprüche

1. Verfahren zum Festlegen eines Lagerrings (1) an oder in einem Bauteil (2) mittels einer Klebeverbindung, wobei das Verfahren die Schritte aufweist:
a) Aufbringen des Klebstoffs (3) an eine Fläche (4) des Lagerrings (1), die zum Verkleben mit dem Bauteil (2) vorgesehen ist;
b) Voraushärtenlassen des Klebstoffs (3) auf der zum Verkleben vorgesehenen Fläche (4), so dass der Klebstoff (3) keine adhäsive Eigenschaft mehr aufweist;
c) Fügen des Lagerrings (1) und des Bauteils (2) in die gewünschte Relativposition;
d) Aktivieren des Klebstoffs (3) derart, dass er einen adhäsiven Verbund zwischen dem Lagerring (1) und dem Bauteil (2) eingeht,
**dadurch gekennzeichnet,**
**dass** bei der Aktivierung des Klebstoffs (3) gemäß Schritt d) eine Volumenvergrößening des Klebstoffs erfolgt, die bewerkstelligt wird, indem ein Klebstoff verwendet wird, dem ein chemisches oder physikalisches Treibmittel beigegeben ist,
wobei der Klebstoff (3) bei seiner Aufbringung gemäß Schritt a) auch in mindestens einen ringnutartig ausgebildeten Aufnahmeraum (5) gefüllt wird, der in der dem Bauteil (2) zugewandten, zum Verkleben vorgesehenen Fläche (4) des Lagerrings (1) angeordnet ist, wobei der radiale Abstand zwischen dem Grund der Ringnut (5) und dem Bauteil (2) größer ist als der radiale Abstand zwischen der zum Verkleben vorgesehenen Fläche (4) und dem Bauteil (2).

2. Verfahren nach Anspruch 1, **dadurch gekennzeichnet, dass** beim Aufbringen des Klebstoffs (3) gemäß Schritt a) von Anspruch 1 Klebstoff mit einer pastösen Konsistenz verwendet wird.

3. Verfahren nach Anspruch 1 oder 2, **dadurch gekennzeichnet, dass** die Aktivierung des Klebstoffs (3) gemäß Schritt d) von Anspruch 1 durch Aufgabe von Wärmeenergie auf den Klebstoff (3) erfolgt.

4. Verfahren nach Anspruch 3, **dadurch gekennzeichnet, dass** die Aktivierung des Klebstoffs (3) durch Induktion erfolgt.

5. Verfahren nach einem der Ansprüche 1 bis 4, **dadurch gekennzeichnet, dass** der dem Aufnahmeraum (5) benachbarte und einem axialen Ende des Lagerrings (1) zugewandte Bereich (6) einen reduzierten radialen Spaltabstand (s) zwischen Lagerring (1) und Bauteil (2) aufweist, der eine Barriere für den Klebstoff (3) bildet.

## Claims

1. Method for fixing a bearing ring (1) on or in a component (2) by means of an adhesive connection, wherein the method comprises the steps of:
a) applying the adhesive (3) to a face (4) of the bearing ring (1) that is intended to be adhesively bonded to the component (2);
b) allowing the adhesive (3) to pre-cure on the face (4) intended for adhesive bonding, such that the adhesive (3) no longer has any adhesive properties;
c) joining the bearing ring (1) and the component (2) in the desired relative position;
d) activating the adhesive (3) such that it produces an adhesive bond between the bearing ring (1) and the component (2),
**characterized in that**
the volume of the adhesive (3) increases upon activation according to step d), this being brought about by using an adhesive to which is added a chemical or physical blowing agent,
wherein the adhesive (3), when applied according to step a), is also filled into at least one annular receiving space (5) arranged **in that** face (4) of the bearing ring (1) that is oriented towards the component (2) and is intended for adhesive bonding, wherein the radial distance between the base of the annular groove (5) and the component (2) is larger than the radial distance between the face (4) intended for adhesive bonding and the component (2).

2. Method according to Claim 1, **characterized in that**, when the adhesive (3) is applied according to step a) of Claim 1, use is made of an adhesive having a paste-like consistency.

3. Method according to Claim 1 or 2, **characterized in that** activation of the adhesive (3) according to step d) of Claim 1 is effected by applying heat energy to the adhesive (3).

4. Method according to Claim 3, **characterized in that** the adhesive (3) is activated by induction.

5. Method according to one of Claims 1 to 4, **characterized in that** the region (6) adjacent to the receiving space (5) and oriented towards an axial end of the bearing ring (1) has a reduced radial gap distance (s), between the bearing ring (1) and the component (2), which forms a barrier for the adhesive (3).

## Revendications

1. Procédé de fixation d'une bague de palier (1) sur ou dans un composant (2) au moyen d'une liaison adhésive, le procédé présentant les étapes suivantes :
a) appliquer l'adhésif (3) sur une surface (4) de la bague de palier (1), laquelle est prévue pour être collée au composant (2) ;
b) laisser durcir préalablement l'adhésif (3) sur la surface (4) prévue pour être collée, de telle sorte que l'adhésif (3) ne présente plus de propriété adhésive ;
c) assembler la bague de palier (1) et le composant (2) dans la position relative souhaitée ;
d) activer l'adhésif (3) de telle sorte qu'il entre en liaison adhésive entre la bague de palier (1) et le composant (2),
**caractérisé en ce que**
lors de l'activation de l'adhésif (3) à l'étape d), il se produit une augmentation de volume de l'adhésif qui est obtenue en utilisant un adhésif auquel on a ajouté un agent d'expansion chimique ou physique,
l'adhésif (3), lors de son application à l'étape a), étant également versé dans au moins un espace de réception (5) réalisé sous forme de rainure annulaire, qui est disposée dans la surface (4) de la bague de palier (1) prévue pour être collée, tournée vers le composant (2), la distance radiale entre la base de la rainure annulaire (5) et le composant (2) étant supérieure à la distance radiale entre la surface (4) prévue pour être collée et le composant (2).

2. Procédé selon la revendication 1, **caractérisé en ce que** lors de l'application de l'adhésif (3) à l'étape a) de la revendication 1, on utilise de l'adhésif ayant une consistance pâteuse.

3. Procédé selon la revendication 1 ou 2, **caractérisé en ce que** l'activation de l'adhésif (3) à l'étape d) de la revendication 1 s'effectue par apport d'énergie thermique sur l'adhésif (3).

4. Procédé selon la revendication 3, **caractérisé en ce que** l'activation de l'adhésif (3) s'effectue par induction.

5. Procédé selon l'une quelconque des revendications 1 à 4, **caractérisé en ce que** la région (6) adjacente à l'espace de réception (5) et tournée vers une extrémité axiale de la bague de palier (1) présente une distance de fente radiale réduite (s) entre la bague de palier (1) et le composant (2), laquelle constitue une barrière pour l'adhésif (3).
